# EUROPEAN PATENT SPECIFICATION

(11) **EP 2 051 818 B1**
(45) Date of publication and mention of the grant of the patent: **30.05.2012**
(21) Application number: 07793834.8
(22) Date of filing: 07.08.2007
(51) Int. Cl.: B29C 44/46, B05C 5/02

(54) **A DEVICE FOR APPLYING A VISCOUS MIXTURE TO A SURFACE AS WELL AS A METHOD FOR MANUFACTURING AN INSULATION ELEMENT**
VORRICHTUNG ZUM AUFBRINGEN EINES VISKOSEN GEMISCHES AUF EINE FLÄCHE SOWIE VERFAHREN ZUR HERSTELLUNG EINES ISOLATIONSELEMENTS
DISPOSITIF POUR APPLIQUER UN MELANGE VISQUEUX SUR UNE SURFACE ET PROCEDE DE FABRICATION D'UN ELEMENT D'ISOLATION

(30) Priority: 08.08.2006 NL 1032283
(43) Date of publication of application: 29.04.2009
(73) Proprietor: BASF SE, 67056 Ludwigshafen (DE)
(72) Inventor: VAN DER MEER, Antonius Cornelis Johannes Maria, 5061 LA Oisterwijk (NL)
(74) Representative: Blokland, Arie
(86) International application number: PCT/NL2007/000195
(87) International publication number: WO 2008/018787

(56) References cited:
- EP-A- 0 450 731
- EP-A- 1 586 381
- WO-A-2005/087386
- DE-A1- 4 225 618
- US-A- 1 971 262
- US-A- 2 726 632
- US-A- 3 126 574
- US-A- 5 827 360
- US-A1- 2002 015 786

## Description

The present invention relates to a device for applying a viscous mixture to a surface via one or more outlet openings, to which device the viscous mixture is supplied via supply means, which supply means is connected to a first distribution element, which first distribution element is connected to a second distribution element via two or more intermediate pipes, which second distribution element is provided with outlet openings. The present invention further relates to a method for manufacturing an insulation element, comprising the steps of applying a viscous mixture that forms a foam to a substrate layer, allowing the foam thus applied to cure and possibly applying a coating to the foam layer.

Such a method is known per se from Dutch publication No. 9000797 in the name of the present inventor, which has been laid-open to public inspection, wherein a 10 mm thick layer of polyurethane foam is applied to a 3 mm thick chipboard, after which a 70 mm thick layer of mineral wool is applied to the layer of polyurethane foam, followed by the application of a new layer of polyurethane foam. The whole is covered with a 3 mm thick lower cover layer, so that a so-called sandwich combination element is obtained.

From International application WO 2005/087386 which discloses the preamble of claim 1 there is known a distributing device for distributing glue substantially uniformly over a surface, said glue distributing device comprising:
a main distribution chamber comprising a number of outlet openings for discharging glue from the distributing device and applying it to said surface;
a predistribution chamber comprising a number of distribution openings for supplying glue from the predistribution chamber to the main distribution chamber; and
at least one supply opening for supplying the glue to said predistribution chamber, with the position and size of the distribution openings having been selected so that, in use, a substantially uniform pressure distribution of the glue in the main distribution chamber is effected.

The production process of roof elements can in principle be summarised to comprise three stages, viz. first a foam, viz. polyurethane (PUR) or polyisocyanurate (PIR), is applied to a slightly pre-heated chipboard, whereupon the foam will rise, after which finally a cover layer or coating is applied thereto. With such a production process there is a possibility that the foam height will not be constant across the width of the element, which means that so-called air cavities and other unevennesses will form in particular on the sides and at the upper side of the element, which adversely influences the thermally insulating effect of the element.

An outflow element, in particular a so-called casting rake (poker), is used for applying the foam, which outflow element is provided with a viscous mixture from a central point, with the viscous mixture exiting the casting rake at the bottom side via outlet openings, which outlet openings are provided along substantially the entire length of the casting rake. The application of the foam takes place by moving the casting rake in a specific dynamic pattern over the surface moving thereunder. After the foam has been applied, levelling of the foam layer thus provided takes place by means of an air knife, which levelling comprises blowing so-called air slots into the foam in the longitudinal direction of the surface, which air cuts through the foam layer.

The present inventors have found that when the aforesaid T-rake is used, there is a difference in exit velocity between the various outlet openings, which difference in exit velocity adversely affects the mass distribution of the foam layer applied to the surface.

The present inventors have further found that when the exit velocity of the viscous mixture is too high, this will lead to the introduction of air bubbles in the foam layer, which air bubbles may or may not migrate to the surface of the foam layer. A foam layer containing small air bubbles is undesirable in practice.

The present inventors have furthermore found that a uniform residence time of the foaming mixture across the casting rake is not obtained when such a T-rake is used, which may lead to fouling and clogging of the casting rake and the outlet openings present therein, in particular to premature and consequently undesirable curing of the foaming material therein. In the case of higher foam thicknesses, when a so-called double pass is carried out, the second layer that is applied affects the foam layer present thereunder, which is undesirable.

After extensive research the present inventors have furthermore found that a reciprocating casting rake can only effect a uniform distribution of foam on a substrate moving thereunder if both the belt velocity of the surface and the so-called pass velocity of the casting rake are precisely geared to each other, which is very difficult and labourious to realise in practice.

Consequently it is an object of the present invention to provide a device for applying a viscous mixture to a surface via several outlet openings, wherein the mass distribution of the viscous mixture applied to the surface is substantially constant both along the length and across the width of said surface.

Another object of the present invention is to provide a device for applying a viscous mixture to a surface via several outlet openings, which device is easy to clean and which exhibits a low risk of clogging.

Yet another object of the present invention is to provide a device for applying a viscous mixture to a surface via several outlet openings, which device ensures a constant discharge of viscous mixture from each outlet opening.

Another object of the present invention is to provide a device for applying a viscous mixture to a surface via several outlet openings, wherein the phenomenon of a bow wave being formed by the viscous mixture flowing onto the surface from the outlet openings is minimised.

The present invention refers to a device according to claim 1.

One or more of the above objects are met by using such a device. More particularly, the first distribution element provides a constant pressure on the viscous mixture that is present therein, whereupon the viscous mixture is supplied to the second distribution element via two or more intermediate pipes, after which the viscous mixture exits the second distribution element via a number of outlet openings, being deposited on a surface present under the outlet openings. The reactive mixture supplied to the second distribution element via the intermediate pipes will exit said element via the specific position of the outlet openings. By providing at least one outlet opening on the second distribution element on either side of each intermediate pipe, a substantially constant and uniform residence time of the reactive mixture in the second distribution element is achieved, which is of major importance for the foaming reaction, in particular for obtaining an even foam height across the entire width of the surface. Another effect that is achieved is that there will be no "dead or substantially stagnant" spaces or spaces with a significantly longer residence time, which longer residence time may lead to premature and undesirable curing of the reactions mixture therein, resulting in clogging, which in turn will have an adverse effect on the realisation of a uniform residence time.

Furthermore it is in particular desirable with a view to realising a constant residence time of the reactive mixture in the present device that an uneven number of outlet openings is provided on the second distribution element between two intermediate pipes arranged adjacent to each other, in particular that said number of outlet openings is at least three. An uneven number provides a constant and uniform distribution of the reactive mixture over the outlet openings, thereby minimising the risk of the formation of "dead" spaces.

According to the invention the cross-sectional area of both outlet openings near the two ends of the second distribution element is larger than the cross-sectional area of the adjacent outlet opening(s). Such a construction is in particular desirable because a certain contraction of the foam at the outer edges of the surface is observed during the foaming reaction, which contraction is eliminated by slightly increasing the metered amount of foam at the ends in comparison with the amount of foam metered via the adjacent outlet opening(s).

To obtain an optimally constant, uniform supply of the viscous mixture from the first distribution element to the second distribution element, it is in particular desirable that the intermediate pipes are spaced a regular, constant distance apart. Such intermediate pipes are hollow, so that the viscous mixture can flow from the first distribution element to the second distribution element. It is moreover desirable that the intermediate pipes are removable, so that cleaning and maintenance activities can be carried out in a simple manner.

To obtain a substantially constant discharge from each outlet opening on the second distribution element, it is desirable that the outlet openings on the second distribution element are staggered relative to the position of the intermediate pipes. By providing the outlet openings on the second distribution element at slightly staggered positions relative to the intermediate pipes, it is ensured that the residence time of the viscous mixture in the second distribution element is substantially the same for each outlet opening, so that an even profile of viscous mixture can be applied to the surface. Because contraction of foam takes place at the edge areas during the curing reaction of the foam of the surface, the cross-sectional area of the outflow opening located at the end of the second distribution element is larger than the cross-sectional area of the adjacent outlet opening(s) in order to thus obtain a larger amount of foam on the surface, so that a substantially flat foam mass is obtained on the surface, both across the width and along the length thereof, after completion of the foaming reaction. Such outlet openings having a larger cross-sectional area, which are located at both ends of the second distribution element, thus provide a correction of the foam contraction at both edges of the surface.

The first distribution element preferably has an elongated, hollow configuration, in which connection in particular a tubular configuration must be considered. It is also possible, however, to give the first distribution element a specific profile shape.

The second distribution element preferably has an elongated, hollow configuration so as to realise a maximally homogeneous flow of the viscous mixture therein. It is moreover possible to use the second distribution element in a profile construction.

The elongated, hollow configuration of both the first and the second distribution element makes it possible to carry out the internal cleaning thereof in a simple and accurate manner by means of the usual operations. Furthermore, the two distribution elements are preferably removable.

To realise an optimum pressure buildup and pressure distribution between the first and the second distribution element, it is desirable that the cross-sectional area of the first distribution element is larger than the cross-sectional area of the second distribution element.

In the present device for applying a viscous mixture to a surface via one or more outlet openings, it is desirable that the supply means is positioned in the centre of the first distribution element, in particular with a view to realising a uniform residence time of the viscous mixture across the first distribution element. The supply means in particular comprises a mixing chamber, to which mixing chamber a first pipe for reactants and a second pipe for reactants are connected. In the embodiment in which the viscous mixture comprises a polyurethane foam (PUR), polyol mixed with activators and other components, for example, is supplied via the first pipe, and isocyanate is supplied via the second pipe for reactants. Subsequently the aforesaid flows, viz. the polyol mixture and isocyanate, come into contact with each other at a high speed in the mixing chamber preferably, forming a homogeneous mixture in the mixing chamber, which mixture is subsequently supplied to the first distribution element via the supply means. In a similar manner a PIR foam can be obtained.

To realise an easy cleaning of the two distribution elements, it is desirable that the ends of the first and the second distribution element are provided with detachable closure means.

The present invention is in particular not limited to a second distribution element consisting of one element, but in a special embodiment the second distribution element may be made up of at least two separate distribution elements, each provided with outlet openings and being connected to the first distribution element via one or more intermediate pipes.

Since the present device is used in a stationary construction, it is desirable that the length of the second distribution element substantially corresponds to the width of the surface to which the viscous mixture can be applied. The term stationary is to be understood to mean that the element does not move in a zigzag pattern for applying the viscous mixture to the surface. Such a zigzag pattern is possible within the framework of the present invention, however, more in particular, there is no need to realise an overlapping pattern of viscous mixture on the surface.

In a specific embodiment it is desirable that the cross-sectional area of the outlet openings is variable along the length of the second distribution element, in particular in order to obtain an optimally homogeneous discharge from each of the outflow openings. This means that the cross-sectional area of one outlet opening is different from that of the other outlet opening.

In a specific embodiment of the present invention it is desirable that the cross-sectional area of the intermediate pipes is variable along the length of the first distribution element, in particular in order to obtain a uniform and stable metering of the mixture from the first distribution element to the second distribution element. This means that the cross-sectional area of one the intermediate pipe is different from that of the other intermediate pipe.

In a special embodiment it is desirable that the cross-sectional area of both the first distribution element and the second distribution element is substantially constant along the length of each distribution element, in particular with a view to realising an easy cleaning of the two distribution elements.

The present inventors have furthermore found that the outlet openings in the second distribution element are so positioned that the viscous mixture can be deposited on the surface at an angle of -75 to + 75 degrees, which angle may be regarded as the angle between the direction of flow of the outflowing viscous mixture and the surface.

In order to be able to mount and demount the present device in a simple manner, it is desirable that the intermediate pipes form one or more detachable connections between the first distribution element and a second distribution element, in particular for cleaning purposes.

The present invention further relates to a method for manufacturing an insulation element, comprising the steps of applying a viscous mixture that forms a foam to a substrate layer, allowing the foam thus applied to cure and possibly applying a coating to the foam layer, wherein a device as discussed above is used for applying said viscous mixture, wherein the viscous mixture is deposited on the substrate layer via a supply means, the first distribution element, the intermediate pipes, the second distribution element and the outlet openings.

The present invention will be explained in more detail hereinafter by means of an example, in which connection it should be noted, however, that the present invention is by no means limited to such a special example.

### Example

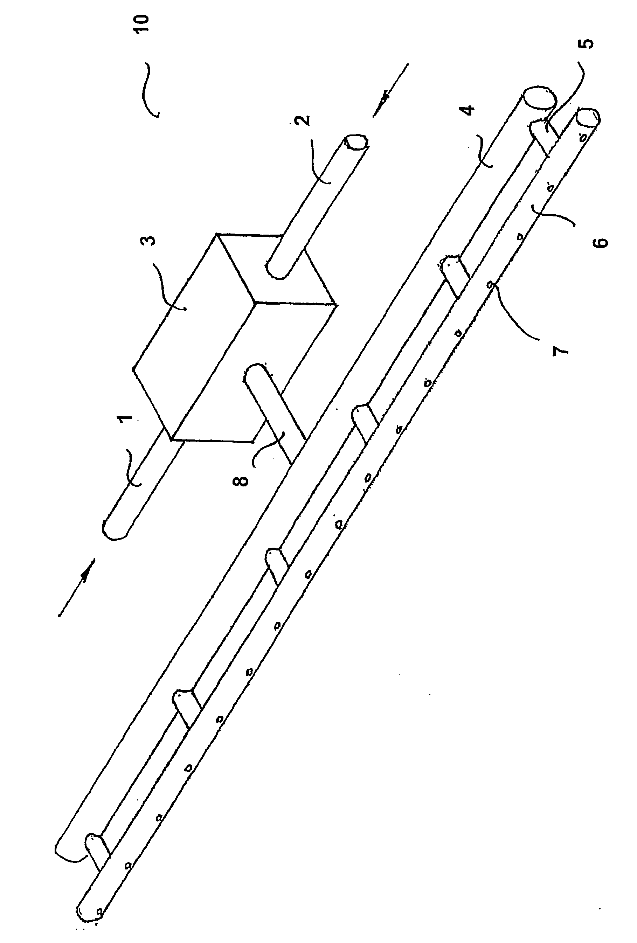

The appended figure shows a perspective view of the present device 10 for applying a viscous mixture (not shown) to a surface (not shown) via one or more outlet openings 7. The device 10 comprises a supply means 8, which supply means 8 is connected to a mixing chamber 3, to which a first pipe 1 for reactants and a second pipe 2 for reactants are connected, to which pipe 1 a mixture of polyol, activators and other components is supplied, for example. Isocyanate is supplied via the pipe 2, in particular if the viscous mixture is a foam for preparing PUR. However, the present invention is not restricted to a PUR foam. The viscous mixture exits the supply means 8 under pressure and enters the first distribution element 4, which distribution element 4 comprises a number of evenly spaced intermediate pipes 5, which intermediate pipes 5 connect a first distribution element 4 to a second distribution element 6. The second distribution element 6 possesses a number of evenly spaced outlet openings 7, from which the viscous mixture can be deposited to a surface (not shown). The outlet openings 7 on the second distribution element 6 are slightly staggered relative to the position of the intermediate pipes 5, which means that the viscous mixture exiting the intermediate pipe 5 cannot flow "straight" to an outlet opening 7 positioned on the second distribution element 6, but needs to travel along a slightly "lengthened" path in the second distribution element 6. As a result of this construction, the residence time of the viscous mixture in the second distribution element 6 will be substantially the same for each outlet opening 7, which will lead to a homogeneous distribution of the viscous mixture on the surface (not shown). It is apparent that it follows from the figure that at least one outlet opening 7 is provided on the second distribution element 6 on either side of each intermediate pipe 5. An uneven number of outlet openings 7 is provided on the second distribution element 6 between two intermediate pipes 5 arranged side by side. The cross-sectional area of both outlet openings near the two ends of the second distribution element is larger than the cross-sectional area of the adjacent outlet opening(s). It should be noted that the present invention is by no means limited to the number of intermediate pipes 5 and outlet openings 7 shown in the figure. It may furthermore be noted in this connection that the distribution elements 4, 6 are not limited to a cylindrical configuration as shown, but that it may also have a profile shape. Moreover, the second distribution element 6 may be configured as two separate distribution elements, in which case the two distribution element thus configured may be in line, for example extending parallel to the first distribution element 4.

The present invention in particular relates to the application of the viscous mixture to a surface, with the viscous mixture having a substantially homogeneous distribution both in the longitudinal direction and in the transverse direction of the surface.

## Claims

1. A device (10) for applying a viscous mixture that forms a foam to a surface via several outlet openings (7) to which device the viscous mixture is supplied via supply means (8). which supply means (8) is connected to a first distribution element (4) which first distribution element (4) is connected to a second distribution element (6) via two or more intermediate pipes (5) which second distribution element (6) is provided with outlet openings (7) wherein at least one outlet opening is provided on the second distribution element (6) on either side of each intermediate pipe (8), **characterised in that** the cross-sectional area of both outlet openings (7) near the two ends of the second distribution element (6) is larger than the cross-sectional area of the adjacent outlet opening(s) (7).

2. A device (10) according to claim 1, **characterised in that** an uneven number of outlet openings (7) is provided on the second distribution element (6) between two intermediate pipes arranged adjacent to each other.

3. A device (10) according to claim 2, **characterised in that** said uneven number of outlet openings (7) is at least three.

4. A device (10) according to claim 1, **characterised in that** the intermediate pipes (5) are positioned a regular, constant distance apart.

5. A device (10) according to any one or more of the preceding claims, **characterised in that** the outlet openings (7) or the second distribution element (6) are staggered relative to the position of the intermediate pipes (5).

6. A device (10) according to any one or more of the preceding claims, **characterised in that** the first distribution element (4) has an elongated, hollow configuration.

7. A device (10) according to any one or more of the preceding claims, **characterised In that** the second distribution element (6) has an elongated, hollow configuration.

8. A device (10) according to any one or more of the preceding claims **characterised in that** the cross-sectional area of the first distribution element (4) is larger than the cross-sectional area of the second distribution element (6).

9. A device (10) according to any one or more of the preceding claims, **characterised in that** the first distribution element (4) is arranged parallel to the second distribution element (6).

10. A device (10) according to any one or more of the preceding claims, **characterised in that** the supply means (8) is positioned in the centre of the first distribution element (4).

11. A device (10) according to any one or more of the preceding claims, **characterised in that** the ends of the first and the second distribution element are provided with detachable closure means.

12. A device (10) according to any one or more of the preceding claims, **characterised in that** the second distribution element (6) is made up of at least two separate distribution elements, each provided with outlet openings (7) and being connected to the first distribution element (4) via one or more intermediate pipes (5).

13. A device (10) according to any one or more of the preceding claims, **characterised in that** the length of the second distribution element (6) substantially corresponds to the width of the surface to which the viscous mixture can be applied.

14. A device (10) according to any one or more of the preceding claims, **characterised in that** the cross-sectional area of the outlet openings (7) is variable along the length of the second distribution element (6).

15. A device (10) according to any one or more of the preceding claims, **characterised in that** the cross-sectional area of the intermediate pipes (5) is variable along the length of the first distribution element (4).

16. A device (10) according to any one or more of the preceding claims, **characterised in that** the cross-sectional area of both the first distribution element (4) and the second distribution element (6) is substantially constant along the length of each distribution element.

17. A device (10) according to any one or more of the preceding claims, **characterised in that** the outlet openings (7) in the second distribution element (6) are so positioned that the viscous mixture can be deposited on the surface at an angle of - 75 to + 75 degrees, which angle may be regarded as the angle between the direction of flow of the outflowing viscous mixture and the surface.

18. A device (10) according to any one or more of the preceding claims, **characterised in that** the intermediate pipes (5) each form a detachable connection between the first distribution element (4) and a second distribution element (6).

19. A device 10 according to any one or more of the preceding claims, **characterised in that** the supply means comprises a mixing chamber (3), to which mixing chamber (3) a first pipe (1) for reactants and a second pipe (2) for reactants are connected.

20. A method for manufacturing an insulation element, comprising the steps of applying a viscous mixture that forms a foam to a substrate layer, allowing the foam thus applied to cure and possibly applying a coating to the foam layer, **characterised in that** a device (10) according to any one or more of the preceding claims 1-19 is used for applying said viscous mixture, wherein the viscous mixture is deposited on the substrate layer via the supply means (8) the first distribution element (4), the intermediate pipes (5) the second distribution element (6) and the outlet openings (7).

## Patentansprüche

1. Vorrichtung (10) zum Aufbringen eines einen Schaum bildenden, viskosen Gemischs auf eine Oberfläche über mehrere Auslassöffnungen (7), wobei das viskose Gemisch über eine Zuführeinrichtung (8) der Vorrichtung zugeführt wird, wobei die Zuführeinrichtung (8) mit einem ersten Verteilungselement (4) verbunden ist, wobei das erste Verteilungselement (4) über zwei oder mehr Zwischenrohre (5) mit einem zweiten Verteilungselement (6) verbunden ist, wobei das zweite Verteilungselement (6) mit Auslassöffnungen (7) versehen ist, bei der mindestens eine Auslassöffnung am zweiten Verteilungselement (6) auf beiden Seiten jedes Zwischenrohrs (5) vorgesehen ist, **dadurch gekennzeichnet, dass** die Querschnittsfläche der beiden Auslassöffnungen (7) nahe den beiden Enden des zweiten Verteilungselements (6) größer ist als die Querschnittsfläche der angrenzenden Auslassöffnung(en) (7).

2. Vorrichtung (10) nach Anspruch 1, **dadurch gekennzeichnet, dass** eine ungerade Anzahl Auslassöffnungen (7) am zweiten Verteilungselement (6) zwischen zwei Zwischenrohren, die angrenzend aneinander angeordnet sind, vorgesehen ist.

3. Vorrichtung (10) nach Anspruch 2, **dadurch gekennzeichnet, dass** die ungerade Anzahl Auslassöffnungen (7) mindestens drei beträgt.

4. Vorrichtung (10) nach Anspruch 1, **dadurch gekennzeichnet, dass** die Zwischenrohre (5) in einem gleichmäßigen, konstanten Abstand zueinander positioniert sind.

5. Vorrichtung (10) nach mindestens einem der vorhergehenden Ansprüche, **dadurch gekennzeichnet, dass** die Auslassöffnungen (7) des zweiten Verteilungselements (6) in Bezug auf die Position der Zwischenrohre (5) versetzt sind.

6. Vorrichtung (10) nach mindestens einem der vorhergehenden Ansprüche, **dadurch gekennzeichnet, dass** das erste Verteilungselement (4) eine langgestreckte, hohle Gestalt hat.

7. Vorrichtung (10) nach mindestens einem der vorhergehenden Ansprüche, **dadurch gekennzeichnet, dass** das zweite Verteilungselement (6) eine langgestreckte, hohle Gestalt hat.

8. Vorrichtung (10) nach mindestens einem der vorhergehenden Ansprüche, **dadurch gekennzeichnet, dass** die Querschnittsfläche des ersten Verteilungselements (4) größer ist als die Querschnittsfläche des zweiten Verteilungselements (6).

9. Vorrichtung (10) nach mindestens einem der vorhergehenden Ansprüche, **dadurch gekennzeichnet, dass** das erste Verteilungselement (4) parallel zum zweiten Verteilungselement (6) angeordnet ist.

10. Vorrichtung (10) nach mindestens einem der vorhergehenden Ansprüche, **dadurch gekennzeichnet, dass** die Zuführeinrichtung (8) in der Mitte des ersten Verteilungselements (4) angeordnet ist.

11. Vorrichtung (10) nach mindestens einem der vorhergehenden Ansprüche, **dadurch gekennzeichnet, dass** die Enden des ersten und zweiten Verteilungselements mit lösbaren Verschlussmitteln versehen sind.

12. Vorrichtung (10) nach mindestens einem der vorhergehenden Ansprüche, **dadurch gekennzeichnet, dass** das zweite Verteilungselement (6) aus mindestens zwei getrennten Verteilungselementen besteht, die jeweils mit Auslassöffnungen (7) versehen und über ein oder mehrere Zwischenrohre (5) mit dem ersten Verteilungselement (4) verbunden sind.

13. Vorrichtung (10) nach mindestens einem der vorhergehenden Ansprüche, **dadurch gekennzeichnet, dass** die Länge des zweiten Verteilungselements (6) im Wesentlichen der Breite der Fläche entspricht, auf die das viskose Gemisch aufgebracht werden kann.

14. Vorrichtung (10) nach mindestens einem der vorhergehenden Ansprüche, **dadurch gekennzeichnet, dass** die Querschnittsfläche der Auslassöffnungen (7) entlang der Länge des zweiten Verteilungselements (6) variabel ist.

15. Vorrichtung (10) nach mindestens einem der vorhergehenden Ansprüche, **dadurch gekennzeichnet, dass** die Querschnittsfläche der Zwischenrohre (5) entlang der Länge des ersten Verteilungselements (4) variabel ist.

16. Vorrichtung (10) nach mindestens einem der vorhergehenden Ansprüche, **dadurch gekennzeichnet, dass** die Querschnittsfläche sowohl des ersten Verteilungselements (4) als auch des zweiten Verteilungselements (6) entlang der Länge jedes Verteilungselements im Wesentlichen konstant ist.

17. Vorrichtung (10) nach mindestens einem der vorhergehenden Ansprüche, **dadurch gekennzeichnet, dass** die Auslassöffnungen (7) in dem zweiten Verteilungselement (6) so angeordnet sind, dass das viskose Gemisch unter einem Winkel von - 75° bis + 75° auf der Oberfläche abgeschieden werden kann, wobei der Winkel als Winkel zwischen der Strömungsrichtung des ausströmenden viskosen Gemisches und der Oberfläche zu betrachten ist.

18. Vorrichtung (10) nach mindestens einem der vorhergehenden Ansprüche, **dadurch gekennzeichnet, dass** die Zwischenrohre (5) jeweils eine lösbare Verbindung zwischen dem ersten Verteilungselement (4) und einem zweiten Verteilungselement (6) bilden.

19. Vorrichtung (10) nach mindestens einem der vorhergehenden Ansprüche, **dadurch gekennzeichnet, dass** die Zuführeinrichtung eine Mischkammer (3) aufweist, wobei ein erstes Rohr (1) für Reaktanten und ein zweites Rohr (2) für Reaktanten mit der Mischkammer (3) verbunden sind.

20. Verfahren zur Herstellung eines Isolationselements, das die Schritte umfasst, bei denen ein viskoses Gemisch, das einen Schaum bildet, auf eine Substratschicht aufgebracht wird, dem so aufgebrachten Schaum ermöglicht wird auszuhärten und möglicherweise ein Überzug auf die Schaumsicht aufgebracht wird, **dadurch gekennzeichnet, dass** eine Vorrichtung (10) nach mindestens einem der vorhergehenden Ansprüche 1 bis 19 zum Aufbringen des viskosen Gemischs verwendet wird, wobei das viskose Gemisch über die Zuführeinrichtung (8), das erste Verteilungselement (4), die Zwischenrohre (5), das zweite Verteilungselement (6) und die Auslassöffnungen (7) auf der Substratschicht abgeschieden wird.

## Revendications

1. Dispositif (10) d'application d'un mélange visqueux qui forme une mousse à une surface via plusieurs ouvertures de refoulement (7) lequel dispositif est alimenté en mélange visqueux via un moyen d'alimentation (8), lequel moyen d'alimentation (8) est raccordé à un premier élément de distribution (4), lequel premier élément de distribution (4) est raccordé à un second élément de distribution (6) via deux tuyaux intermédiaires ou plus (5), lequel second élément de distribution (6) est pourvu d'ouvertures de refoulement (7), dans lequel au moins une ouverture de refoulement est disposée sur le second élément de distribution (6) de chaque côté de chaque tuyau intermédiaire (5), **caractérisé en ce que** l'aire en coupe des deux ouvertures de refoulement (7) près des deux extrémités du second élément de distribution (6) est plus grande que l'aire en coupe de la ou des ouvertures de refoulement adjacentes (7).

2. Dispositif (10) selon la revendication 1, **caractérisé en ce qu'**un nombre impair d'ouvertures de refoulement (7) est disposé sur le second élément de distribution (6) entre deux tuyaux intermédiaires agencés adjacents l'un à l'autre.

3. Dispositif (10) selon la revendication 2, **caractérisé en ce que** ledit nombre impair d'ouvertures de refoulement (7) s'élève à au moins trois.

4. Dispositif (10) selon la revendication 1, **caractérisé en ce que** les tuyaux intermédiaires (5) sont positionnés à une distance régulière et constante l'un de l'autre.

5. Dispositif (10) selon une ou plusieurs quelconques des revendications précédentes, **caractérisé en ce que** les ouvertures de refoulement (7) du second élément de distribution (6) sont en quinconce par rapport à la position des tuyaux intermédiaires (5).

6. Dispositif (10) selon une ou plusieurs quelconques des revendications précédentes, **caractérisé en ce que** le premier élément de distribution (4) est de configuration allongée et creuse.

7. Dispositif (10) selon une ou plusieurs quelconques des revendications précédentes, **caractérisé en ce que** le second élément de distribution (6) est de configuration allongée et creuse.

8. Dispositif (10) selon une ou plusieurs quelconques des revendications précédentes, **caractérisé en ce que** l'aire en coupe du premier élément de distribution (4) est plus grande que l'aire en coupe du second élément de distribution (6).

9. Dispositif (10) selon une ou plusieurs quelconques des revendications précédentes, **caractérisé en ce que** le premier élément de distribution (4) est agencé parallèle au second élément de distribution (6).

10. Dispositif (10) selon une ou plusieurs quelconques des revendications précédentes, **caractérisé en ce que** le moyen d'alimentation (8) est positionné au centre du premier élément de distribution (4).

11. Dispositif (10) selon une ou plusieurs quelconques des revendications précédentes, **caractérisé en ce que** les extrémités du premier et du second élément de distribution sont pourvues de moyens de fermeture amovibles.

12. Dispositif (10) selon une ou plusieurs quelconques des revendications précédentes, **caractérisé en ce que** le second élément de distribution (6) est constitué d'au moins deux éléments de distribution séparés, chacun étant pourvu d'ouvertures de refoulement (7) et étant raccordé au premier élément de distribution (4) via un ou plusieurs tuyaux intermédiaires (5).

13. Dispositif (10) selon une ou plusieurs quelconques des revendications précédentes, **caractérisé en ce que** la longueur du second élément de distribution (6) correspond sensiblement à la largeur de la surface sur laquelle le mélange visqueux peut être appliqué.

14. Dispositif (10) selon une ou plusieurs quelconques des revendications précédentes, **caractérisé en ce que** l'aire en coupe des ouvertures de refoulement (7) est variable le long de la longueur du second élément de distribution (6).

15. Dispositif (10) selon une ou plusieurs quelconques des revendications précédentes, **caractérisé en ce que** l'aire en coupe des tuyaux intermédiaires (5) est variable le long de la longueur du premier élément de distribution (4).

16. Dispositif (10) selon une ou plusieurs quelconques des revendications précédentes, **caractérisé en ce que** l'aire en coupe à la fois du premier élément de distribution (4) et du second élément de distribution (6) est sensiblement constante le long de la longueur de chaque élément de distribution.

17. Dispositif (10) selon une ou plusieurs quelconques des revendications précédentes, **caractérisé en ce que** les ouvertures de refoulement (7) dans le second élément de distribution (6) sont positionnées de telle sorte que le mélange visqueux peut être déposé sur la surface à un angle de -75 à +75 degrés, lequel angle peut être considéré comme l'angle entre le sens d'écoulement du mélange visqueux s'écoulant et la surface.

18. Dispositif (10) selon une ou plusieurs quelconques des revendications précédentes, **caractérisé en ce que** les tuyaux intermédiaires (5) forment chacun un raccordement amovible entre le premier élément de distribution (4) et un second élément de distribution (6).

19. Dispositif (10) selon une ou plusieurs quelconques des revendications précédentes, **caractérisé en ce que** le moyen d'alimentation comprend une chambre de mélange (3), à laquelle chambre de mélange (3) sont raccordés un premier tuyau (1) pour les réactifs et un second tuyau (2) pour les réactifs.

20. Procédé de fabrication d'un élément d'isolation, comprenant les étapes consistant à appliquer un mélange visqueux qui forme une mousse à une couche de substrat, laisser durcir la mousse ainsi appliquée et éventuellement appliquer un revêtement sur la couche de mousse, **caractérisé en ce qu'**un dispositif (10) selon une ou plusieurs quelconques des revendications précédentes 1 à 19 est utilisé pour appliquer ledit mélange visqueux, où le mélange visqueux est déposé sur la couche de substrat via le moyen d'alimentation (8), le premier élément de distribution (4), les tuyaux intermédiaires (5), le second élément de distribution (6) et les ouvertures de refoulement (7).
